# EUROPEAN PATENT SPECIFICATION

(11) **EP 3 919 343 B1**
(45) Date of publication and mention of the grant of the patent: **05.08.2026**
(21) Application number: 19914146.6
(22) Date of filing: 21.06.2019
(51) Int. Cl.: E01B 25/34, B60L 13/00, B60L 13/04, B61L 5/06, B61L 11/08, B61L 23/00

(54) **TURNOUT SYSTEM OF PERMANENT MAGNET MAGLEV RAIL TRANSIT AND CONTROL METHOD THEREFOR**
WEICHENSYSTEM FÜR PERMANENTMAGNET-SCHWEBEBAHNEN UND STEUERVERFAHREN DAFÜR
SYSTÈME D'AIGUILLAGE POUR TRANSPORT À SUSTENTATION MAGNÉTIQUE À AIMANT PERMANENT ET SON PROCÉDÉ DE COMMANDE

(30) Priority: 31.01.2019 CN 201910095254; 31.01.2019 CN 201910095326
(43) Date of publication of application: 08.12.2021
(73) Proprietor: Jiangxi University of Science and Technology, Ganzhou, Jiangxi 341000 (CN)
(72) Inventor: DENG, Yongfang, Ganzhou, Jiangxi 341000 (CN); YANG, Bin, Ganzhou, Jiangxi 341000 (CN); YANG, Jie, Ganzhou, Jiangxi 341000 (CN); QIU, Zherui, Ganzhou, Jiangxi 341000 (CN)
(74) Representative: Dragotti & Associati S.P.A.
(86) International application number: PCT/CN2019/092367
(87) International publication number: WO 2020/155531

(56) References cited:
- WO-A1-2007/134641
- WO-A1-2018/126160
- CN-A- 103 276 643
- CN-A- 103 276 643
- CN-A- 104 029 686
- CN-A- 104 029 686
- CN-A- 107 170 545
- CN-A- 109 895 811
- CN-A- 109 898 372
- CN-U- 207 391 954
- DE-A1- 2 436 466
- FR-A1- 2 197 087
- JP-A- 2003 087 910
- NURIA DEL-VALLE ET AL: "Magnet Guideways for Superconducting Maglevs: Comparison Between Halbach-Type and Conventional Arrangements of Permanent Magnets", JOURNAL OF LOW TEMPERATURE PHYSICS, KLUWER ACADEMIC PUBLISHERS-CONSULTANTS BUREAU, NE, vol. 162, no. 1 - 2, 22 September 2010 (2010-09-22), pages 62 - 71, XP019854614, ISSN: 1573-7357, DOI: 10.1007/S10909-010-0225-0

## Description

### FIELD

The present invention relates to the field of maglev rail transit, in particular to a switch system of permanent magnet maglev rail transit.

### BACKGROUND

Maglev trains, as modern rail transit systems, have advantages including low energy consumption, high speed, safety and convenience. Switches are indispensable device for rail transit line switching. In the prior art, there are few researches on switches for permanent magnet maglev trains. Up to now, only a few researches involve maglev switches. Consequently, the improvement of the efficiency of maglev rail transit lines, especially permanent magnet maglev rail transit lines, is limited.

WO2018126160A1 is related to a system for vehicle-side route switching (as opposed to the ubiquitous track-side switching). Such a system includes a switching apparatus that separates levitation (normal gravity loads) from guidance (lateral centrifugal loads). The mechanisms that handle normal loads are separated from the mechanisms that handle lateral loads using track-side components and vehicle-side components. On the vehicle-side, at least one set of levitation bogies and at least two sets of guidance bogies (one on each side of the vehicle) can be engaged by mechanical movement or electromagnetic activation. On the track-side, at least one set of levitation tracks sits completely below the vehicle, and one or two sets of guidance tracks sit on one or both sides of the vehicle, depending on whether the vehicle is going through a switch or not. The vehicle-side switching system may require only vehicle-side mechanical movement of quick and small mechanisms, no track-side mechanical movement, is less prone to systemic failure, and allows for rapid redirection of successive vehicles.

FR2197087A1 relates to a splitter having a tailgate screw for at least one non-vehicle lift path. The invention discloses a mechanical or electrical trained analog person G, on which a magnet or a dominant electric circuit passed by an electric current is arranged. These circuits or magnets constitute a magnetic device for lateral guidance and noise reduction, and are matched with at least one circuit or sub-conductive plate in the way.

DE2436466A1 relates to switching points for levitated railway system. The noncontacting switching points are used in a railway with levitated track, and have no moving parts. The levitating and driving forces are made available in the switch area by an extended asynchronous stator element which is supplied with energy for a short period. This period is shorter than the dwelling period of the vehicle in the switch region. The power is supplied to the primary winding which can be in the form of a direct or three phase energised winding through an inertia energy storage for preventing too large peaks in the power supply grid.

CN105755914A relates to a mechanical switch and turning method applied to high-temperature superconductor maglev systems, in which the device drives the magnetic track to translate by means of a translation driver, so that two permanent magnet tracks are butt-jointed to accomplish switching. However, with the scheme of driving the track for switching, the infrastructure construction cost and maintenance cost are high, and the operating efficiency and economic efficiency of switches are low.

CN107554555A relates to an electromagnetic switch for a maglev system, in which the device simulates an electromagnetic field of permanent magnet by controlling an electromagnetic coil, so that the magnetic field of the electromagnetic coil is coupled with the magnetic field of the permanent magnet track to realize switching for a maglev train. However, it is difficult to simulate the magnetic field of permanent magnet with an electromagnetic coil, and the technical requirements are high.

In the prior art, the switch system comprises a track assembly and a bogie assembly, the track assembly comprises a main track, which is provided with a main track permanent magnet array arranged along the main direction, the bogie assembly comprises a bogie body, which is arranged above the track assembly, the bogie body is provided with a fixed magnetic set. The fixed magnetic set is arranged relative to the main track permanent magnet array. When driving in a straight line, the fixed magnetic sets of the bogie assembly on both sides of the vehicle are magnetically engaged with the main track permanent magnet array; when turning, the fixed magnetic set of the bogie assembly on one side of the vehicle disengages from the main track permanent magnet array to allow the vehicle to turn to the other side. It can be seen that when turning, only one side of the bogie remains magnetically engaged with the main track permanent magnet array, resulting in a decrease in the stability of the vehicle.

### SUMMARY

The object of the present invention is to provide a switch system of permanent magnet maglev rail transit, so as to improve the operating efficiency and utilization of permanent magnet maglev rail transit lines.

Art related to the invention discloses a switch system of permanent magnet maglev rail transit, which comprises: switch tracks and onboard magnet sets running on the tracks.

The switch tracks comprise: a main track 1 before bifurcation, main tracks 2 and 3 after bifurcation, a left telescopic guide track 4, a right telescopic guide track 5, and a driving assembly; the main track 1 forms two new main tracks (main track 2 and main track 3) on the left and right sides after the switch structure; the telescopic magnetic guide tracks are laid on the two sides of the bifurcation of the main track respectively, and form guide tracks with the main tracks after bifurcation respectively; the driving assembly is configured to control the guide tracks on the two sides to extend and retract; the main tracks 2 and 3 are laid along the main track after bifurcation to link up the main tracks bifurcated by the guide tracks, so that the train returns to the linear track.

The main tracks and the guide tracks consist of permanent magnet arrays and are laid along the switch tracks

The track gauge between the guide tracks is equal to the track gauge between the main tracks.

The onboard magnet sets comprise: a bogie, main moving magnet sets, and guide magnet sets; altogether four magnet sets are installed on the bogie; the two main moving magnet sets are installed on the two sides of the center line of the bogie respectively to ensure stable running of the train in the track; the guide magnet sets are installed on the two sides of the bogie and combined with the main moving magnet sets on the same sides to work with the telescopic guide tracks in the extended state. Both the main moving magnet sets and the guide magnet sets consist of permanent magnet arrays. When the train runs on the linear main track, a main moving magnet sets in the onboard magnet sets act with the main track to provide levitation force, and the train runs on the main track in a levitation state under the thrust force of the main motor; when the train is about to reach the track bifurcation, the train operator selects the desired running direction and provides a signal to the motor that controls the track on the specified side to extend and retract; the telescopic guide track on the track extends under the control of the motor, and is subjected to the action of a turning track magnetic field formed by the telescopic guide track and the guide magnet set and the main moving magnet set on the same side in the onboard magnet sets; the onboard magnet set on the same side slides onto the telescopic guide track without contact; in the entire running process of the train through the track bifurcation, the telescopic guide track is maintained in the extended state; the main moving magnet is about to leave the main track and doesn't provide levitation force anymore; in that process, the levitation force is provided by the guide magnet set, the main moving magnet set and the telescopic guide track; at the end of the bifurcation process, a main moving magnet set in the onboard magnet sets slides into the linear main track on the same side after the bifurcation again without contact; after the main moving magnet set enters into the main track after bifurcation, the operation of the guide magnet set and the main moving magnet set on the telescopic guide track is completed, and the train accomplishes the switching operation, the motor controls the telescopic guide track on the same side to retract, the main moving magnet set on the train is butt-jointed with the main track after bifurcation, and the train returns to the linear operation state.

The above technical scheme attains the following beneficial effects:
Switch control for maglev trains can be realized, permanent magnet maglev rail transit line switching can be accomplished, the operating efficiency of maglev lines can be improved, the laying of maglev tracks can be optimized, the material consumption in maglev track laying can be reduced, and the construction cost of maglev tracks can be reduced.

In addition, to overcome the drawbacks in the prior art, the present invention further provides a switch system of permanent magnet maglev rail transit for turning bifurcation or merging and a control method thereof.

Firstly, to attain the above-mentioned object, the present invention provides a switch system of permanent magnet maglev rail transit, which comprises: a track system and a bogie assembly, wherein, the track system comprises: a main track, provided with a main track permanent magnet array arranged thereon in the main direction; a left turning main track arranged on the left side of the main track in the main direction, at 10-45° turning angle with respect to the direction of the main track before bifurcation; wherein a permanent magnet array of left turning main track is arranged on the left turning main track, and the magnetic field of the permanent magnet array of left turning main track extends the magnetic field of the permanent magnet array of main track but deviates to the left direction; a right turning main track arranged on the right side of the main track in the main direction, at 10-45° turning angle with respect to the direction of the main track before bifurcation; wherein a permanent magnet array of right turning main track is arranged on the right turning main track, and the magnetic field of the permanent magnet array of right turning main track extends the magnetic field of the permanent magnet array of main track but deviates to the right direction; a left-side turning track, arranged at the outer side of the left turning main track, having an arc curved along the main track to a direction parallel to the left turning main track; wherein a permanent magnet array of left-side turning track is arranged on the left-side turning track, and the magnetic field of the permanent magnet array of left-side turning track is arranged to link up the magnetic field of the permanent magnet array of left turning main track and the magnetic field of the permanent magnet array of main track; a right-side turning track, arranged at the outer side of the left turning main track, having an arc curved along the main track to a direction parallel to the right turning main track; wherein a permanent magnet array of right-side turning track is arranged on the right-side turning track, and the magnetic field of the permanent magnet array of right-side turning track is arranged to link up the magnetic field of the permanent magnet array of right turning main track and the magnetic field of the permanent magnet array of main track. The bogie assembly comprises: a bogie body arranged above the track system for bearing loads to realize running or turning; wherein a fixed magnet set is arranged in the middle of the lower side of the bogie body, at least one guide magnet set is arranged on the two sides of the fixed magnet set respectively, the fixed magnet set is arranged opposite to the permanent magnet set for main track or the permanent magnet array of left turning main track or the permanent magnet array of right turning main track, the magnetic pole at the lower part of the fixed magnet set is the same as the magnetic pole at the upper part of the permanent magnet array of main track, the permanent magnet array of left turning main track or the permanent magnet array of right turning main track, and is configured to interact with its magnetic field to provide upward thrust force to the bogie body, so as to maintain the bogie body in a levitation state without direct contact with respect to the track system; the guide magnet set is arranged opposite to the permanent magnet array of right-side turning track or the permanent magnet array of left-side turning track respectively, the magnetic pole at the lower part of the guide magnet set is the same as the magnetic pole at the upper part of the permanent magnet array of right-side turning track or the permanent magnet array of left-side turning track, and is configured to participate in the interaction of the magnetic fields to provide upward thrust force to the bogie body, so that the bogie body is maintained in a levitation state without direct contact with respect to the track system and turns along the permanent magnet array of right-side turning track or the permanent magnet array of left-side turning track; a driving assembly is arranged at the upper side of the bogie body and configured to drive the guide magnet set at the turning side to descend when the bogie body runs above the left-side turning track or the right-side turning track; and drive the guide magnet set at the turning side to retract when the bogie body runs above the left turning main track or the right turning main track.

Optionally, in the above-mentioned switch system of permanent magnet maglev rail transit, the main tracks comprise two or more main tracks, and the main tracks are arranged in a way that they transit gradually from a parallel form in the main direction to an outward bifurcated form or gradually close up to be parallel to each other in the main direction from a bifurcated form; the left turning main track is arranged between the bifurcations of the main tracks, and the left-side turning track is arranged at the outer side of the main track that is bifurcated leftward; the right turning main track is arranged between the bifurcations of the main tracks, and the right-side turning track is arranged at the outer side of the main track that is bifurcated rightward.

Optionally, in the above-mentioned switch system of permanent magnet maglev rail transit, the main tracks, the left turning main track, and the left-side turning track are arranged at least partially parallel and opposite to each other; the main tracks, the right turning main track, and the right-side turning track are arranged at least partially parallel and opposite to each other.

Optionally, in the above-mentioned switch system of permanent magnet maglev rail transit, the spacing between the portions of the main tracks, the left turning main track and the left-side turning track that are parallel and opposite to each other is 21-210mm; the spacing between the portions of the main tracks, the right turning main track and the right-side turning track that are parallel and opposite to each other is 21-210mm.

Optionally, in the above-mentioned switch system of permanent magnet maglev rail transit, the permanent magnet arrays are Halbach arrays.

Optionally, in the above-mentioned switch system of permanent magnet maglev rail transit, the driving assembly is a linear step motor.

Optionally, in the above-mentioned switch system of permanent magnet maglev rail transit, the linear step motor drives the guide magnet set at the turning side to descend or retract within a range of 12-120mm or at least half of the height of the permanent magnet arrays on the track system.

Optionally, in the above-mentioned switch system of permanent magnet maglev rail transit, the spacing between the guide magnet set and the fixed magnet set is 10-100mm.

In addition, to attain the above-mentioned object, the present invention further provides a method for controlling a switch system of maglev rail transit, which is applied to the above-mentioned switch system of permanent magnet maglev rail transit, and comprises the following steps: when the bogie body bears the loads and runs in the main direction, the magnetic field of the fixed magnet set interacts with the magnetic field of the permanent magnet array of main track, to maintain the bogie body in a levitation state without direct contact with respect to the main tracks; when the bogie body bears the loads and turns to a side with respect to the main direction, the magnetic field of the fixed magnet set interacts with the magnetic field of the permanent magnet array of main track, to maintain the bogie assembly in a levitation state without direct contact with respect to the track system; at the same time, the guide magnet set at the turning side is driven by the driving assembly to descend to be opposite to the permanent magnet array of the turning track at the turning side, the magnetic pole at the lower part of the guide magnet set participates in the interaction of the magnetic fields to provide upward thrust force to the bogie body, so that the bogie body is maintained in a levitation state without direct contact with respect to the track system and turns along the permanent magnet array of the turning track at the turning side; the driving assembly arranged on the bogie body drives the guide magnet set at the turning side to retract when the bogie body runs above the corresponding main track after bifurcation at the turning side; when the bogie body bears the loads and closes up to the main direction gradually from a side of the main direction, in the process that the bifurcations of the main track are about to close, the fixed magnet set interacts with the magnetic field of the corresponding main track in the closing-up direction first to provide upward thrust force to the bogie body, so that the bogie body is maintained in a levitation state without direct contact with respect to the track system and gradually closes up to the main direction along the main track in the closing-up direction; when the bogie body gradually closes up to be above the corresponding turning track in the closing-up direction, the driving assembly drives the guide magnet set arranged at the closing-up side to descend to be opposite to the permanent magnet array of the turning track at the closing-up side, the guide magnet set runs to the main direction under the guiding action of the magnetic field of the permanent magnet array of the turning track at the closing-up side, and the driving assembly drives the guide magnet set at the closing-up side to retract when the guide magnet set closes up to the main direction of the main track.

Optionally, the above-mentioned method for controlling a switch system of maglev rail transit is applied to a maglev system that is maintained in a levitation state under the control of repulsion force of permanent magnets, attraction force of permanent magnets, tangential force of permanent magnets, or electromagnetic attraction force.

The above technical scheme attains the following beneficial effects:
The switch system and control method provided by the present invention realize switch control for maglev trains, by means of the steering and guiding action of a left turning main track, a right turning main track, a left-side turning track and a right-side turning track arranged on the two sides of the bifurcation of the main track on the bogie body. The present invention can realize line switching of permanent magnet maglev rail transit by means of the control of the switch system, and thus improves the operating efficiency of maglev rail transit lines, optimizes the track laying of maglev rail transit lines, reduces the material consumption of track laying, and reduces the construction cost of maglev tracks.

### BRIEF DESCRITION OF THE DRAWINGS

Fig. 1 is a schematic diagram of the switch system of MAS-type permanent magnet maglev rail transit in the present invention;
Fig. 2 is a schematic structural diagram of the MAS-type onboard telescopic magnet set in the present invention;
Fig. 3 is a schematic structural diagram of the MAS-type switch track in the present invention;
Fig. 4 is a schematic diagram of the arrangement of the magnetic tracks of MAS-type permanent magnet maglev rail transit in the present invention;
Fig. 5 is a schematic diagram of the switching process of MAS-type permanent magnet maglev rail transit in the present invention;
Fig. 6 is a schematic diagram of the merging process of MAS-type permanent magnet maglev rail transmit in the present invention;
Fig. 7 is a schematic diagram of the switch system of Halbach array permanent magnet maglev rail transit in the present invention;
Fig. 8 is a schematic structural diagram of the Halbach array onboard telescopic magnet set in the present invention;
Fig. 9 is a schematic structural diagram of the Halbach array switch track in the present invention;
Fig. 10 is a schematic diagram of the arrangement of the magnetic tracks of Halbach array permanent magnet maglev rail transit in the present invention;
Fig. 11 is a schematic diagram of the switching process of Halbach array permanent magnet maglev rail transit in the present invention;
Fig. 12 is a schematic diagram of the switch system of MAS-type permanent magnet maglev rail transit in the present invention;
Fig. 13 is a schematic structural diagram of the MAS-type onboard telescopic magnet set in the present invention;
Fig. 14 is a schematic structural diagram of the MAS-type switch track in the present invention;
Fig. 15 is a schematic diagram of the arrangement of the magnetic tracks of MAS-type permanent magnet maglev rail transit in the present invention;
Fig. 16 is a schematic diagram of the switching process of MAS-type permanent magnet maglev rail transit in the present invention;
Fig. 17 is a schematic diagram of the merging process of MAS-type permanent magnet maglev rail transmit in the present invention;
Fig. 18 is a schematic diagram of the switch system of Halbach array permanent magnet maglev rail transit in the present invention;
Fig. 19 is a schematic structural diagram of the Halbach array onboard telescopic magnet set in the present invention;
Fig. 20 is a schematic structural diagram of the Halbach array switch track in the present invention;
Fig. 21 is a schematic diagram of the arrangement of the magnetic tracks of Halbach array permanent magnet maglev rail transit in the present invention;
Fig. 22 is a schematic diagram of the switching process of Halbach array permanent magnet maglev rail transit in the present invention.

### Brief Description of the Symbols in the Drawings

1 - main track 1; 2 - main track 2; 3 - main track 3; 4 - left telescopic guide track; 5 - right telescopic guide track; 6 - bogie; 7 - main moving magnet set; 8 - guide magnet set; 11 - main track; 12 - left turning main track; 13 - right turning main track; 14 - left-side turning track; 15 - right-side turning track; 16 - linear step motor; 17 - bogie body; 18 - fixed magnet set; 19 - guide magnet set

### DETAILED DESCRIPTION

Hereunder the present invention will be further detailed in embodiments, with reference to the accompanying drawings. It should be understood that the embodiments detailed below are provided only for illustrating the present invention but are not intended to limit the scope of the present invention.

Those skilled in the art can easily understand that all terms used herein (including technical terms and scientific terms) are intended to have the common meanings that are comprehended by those having ordinary skills in the art to which the present invention belongs, unless otherwise defined. It should also be understood that those terms defined in general dictionaries should be understood as having meanings in line with their meanings in the context of the prior art, and should not be comprehended as having meanings that are too ideally or formally, unless otherwise defined herein. The term "and/or" described herein is intended to cover the existence of either item and co-existence of both items. The terms "inside" and "outside" described herein mean that the direction toward the interior of the track system is "inside" with respect to the track system itself, while the opposite direction is "outside"; rather than a specific definition on the mechanism of the device in the present invention. The terms "left" and "right" described herein means that the left side of the user is "left" while the right side of the user is "right" when the user faces the direction of travel of the bogie assembly; rather than a specific definition on the mechanism of the device in the present invention. The term "connection" described herein may be a direct connection between components or an indirect connection between components via other components. The terms "up" and "down" described here means that the direction from the track system toward the bogie body is "up" while the direction from the bogie body toward the track system is "down" when the user faces the direction of travel of the bogie assembly; rather than a specific definition on the mechanism of the device in the present invention. The term "main direction" described here means the direction along the main tracks parallel to each other or along the main tracks before bifurcation, i.e., the length direction of the floor of the track system as indicated in the accompanying drawings.

### Art relating to the invention 1:

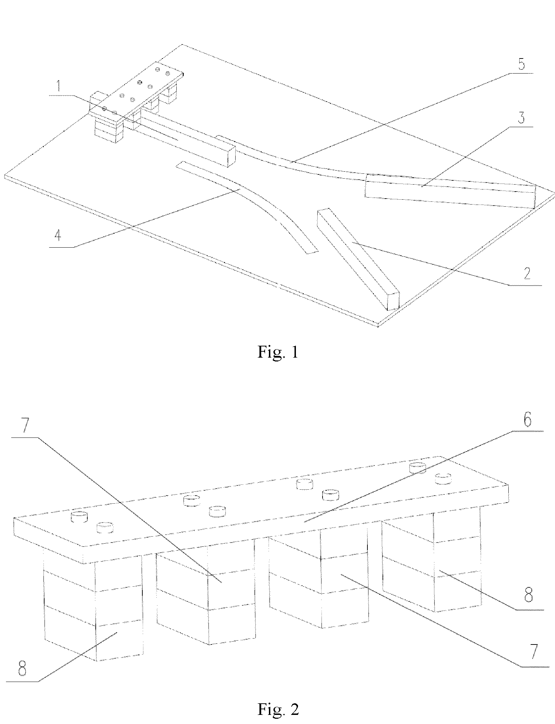

Fig. 1 is a schematic diagram of the switch system applicable to MAS-type maglev rail transit. As shown in Fig. 1, the switch system of maglev rail transit comprises a main track 1, a main track 2, a main track 3, a left telescopic guide track 4, a right telescopic guide track 5, a bogie 6, a main moving magnet set 7, and a guide magnet set 8. Hereunder the switch system will be described.

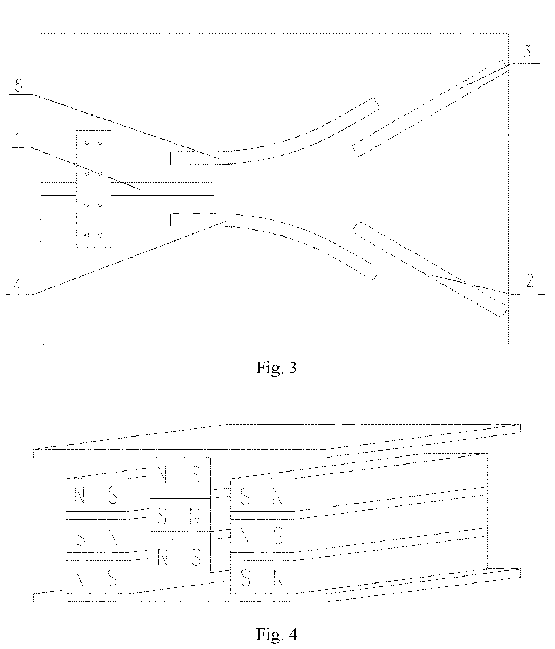

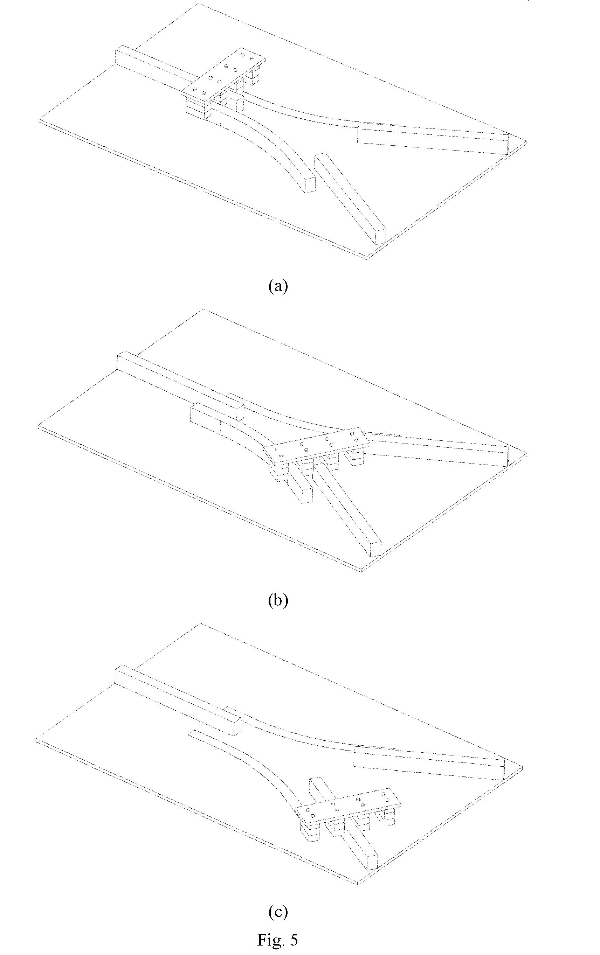

As shown in Fig. 1, the main track 1, the main track 2, the main track 3, the telescopic guide track 4 and the telescopic guide track 5 consist of a permanent magnet array respectively, the turning radius at the bifurcation is 30°, and a set of telescopic magnetic guide tracks is provided at the two sides of the bifurcation; the tracks formed by the magnets are in height of 34mm and laid in a "splay" form; the telescopic guide track is controlled by a motor to extend and retract, and the length of extension is 34mm, as shown in Fig. 5. The arrangement of the tracks and the onboard magnets is shown in Fig. 4

As shown in Fig. 2, the onboard magnet sets comprise a bogie 6, two main moving magnet sets 7, and two guide magnet sets 8. The two main moving magnet sets 7 are arranged on the two sides of the center line of the bogie respectively at 36mm spacing; the two guide magnet sets 9 are arranged on the two sides of the two main moving magnet sets 8 at 36mm spacing from the main moving magnet set respectively. The length of extension of the magnet sets is 36mm. All of the magnet sets are installed on the bogie 5.

As shown in Fig. 5(a), when the train runs on the linear main track 1, the two main moving magnet sets 7 in the onboard magnet sets work with the main track 1 to provide levitation force, so that the train runs on the main track 1 in a levitation state under the action of the thrust force of the motor: when the train is about to turn left through the bifurcation, as shown in Fig. 5(b), the left telescopic guide track 4 on the train extends under the control of the associated motor and is subjected to the action of a turning track magnetic field formed by the left telescopic guide track, the guide magnet set 8 and the main moving magnet set 7; the guide magnet set 8 and the main moving magnet set 7 slide onto the telescopic guide track 4 without contact, the two main moving magnet sets 7 leave the main track 1 and don't provide levitation force anymore; in the entire running process of the train through the track bifurcation, the telescopic guide track 4 is maintained in an extended state. When the onboard magnet sets are about to reach the new linear main track 2, the two main moving magnet sets 7 in the onboard magnet sets slide into the new track under the action of the magnetic field of the linear track 2 and work with the linear track 2 to provide levitation force. After the main moving magnet sets 7 enter into the linear track 2, the operation of the guide magnet set 8 and main moving magnet set 7 on the same side in the telescopic guide track 4 ends, as shown in Fig. 5(c), the train completes the switching operation, the motor controls the telescopic guide track 4 on the same side to retract, the main moving magnet sets 7 on the train are butt-jointed with the main track 2, and the train returns to the linear operation state.

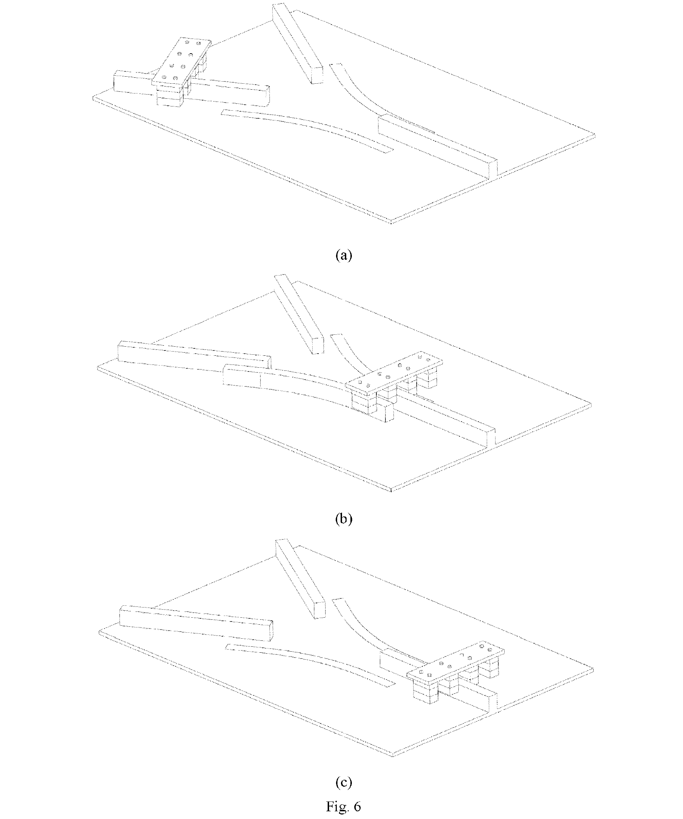

The switch system of permanent magnet maglev rail transit can realize track merging of maglev rail transit. As shown in Fig. 6(a), when the train runs on the linear main track 3, two main moving magnet sets 7 in the onboard magnet sets work with the main track 3 to provide levitation force, and the train runs on the main track 3 in a levitation state under the thrust force of the motor; when the train runs to a track merging area, as shown in Fig. 6(b), the left telescopic guide track 4 on the train extends under the control of the motor and is subjected to the action of a turning track magnetic field formed by the guide magnet set 8, the main moving magnet set 7, and the telescopic guide track on the same side, the guide magnet set 8 and the main moving magnet set 7 slide onto the telescopic guide track 2 without contact, the two main moving magnet sets 7 leave the main track 3 and don't provide levitation force anymore, and the telescopic guide track 4 is maintained in the extended state in the entire running process of the train through the bifurcation. When the turn of the main track on left side exceeds 30°, the train is about to accomplish the switching, and the onboard main moving magnet sets 7 slide into the linear main track 1 without contact. When the onboard magnet sets are about to run to the new linear main track 1, the two main moving magnet sets 7 slide into the new track under the action of the magnetic field of the linear track 1 and work with the linear track to provide levitation force. After the main moving magnet sets 7 enter into the linear track 1, the operation of the guide magnet set 8 and the main moving magnet sets 7 in the telescopic guide track 4 ends, as shown in Fig. 6(c); when the train accomplishes track merging, the motor controls the telescopic guide track 4 on the same side to retract, and the main moving magnet sets 3 on the train run on the main track 1 again.

### Art relating to the invention 2:

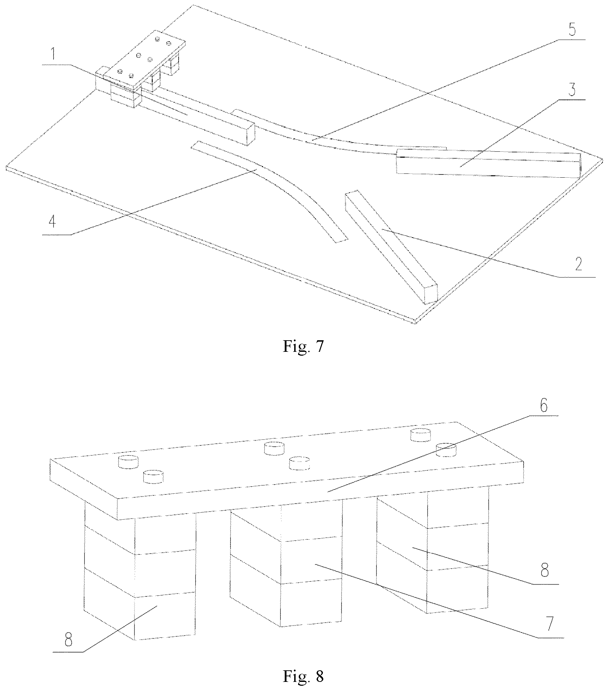

This is also applicable to the switch system of Halbach array maglev rail transit. Fig. 7 is a schematic diagram of Halbach array maglev rail transit. As shown in Fig. 7, the switch system of permanent magnet maglev rail transit comprises a main track 1, a main track 2, a main track 3, a left telescopic guide track 4, a right telescopic guide track 5, a bogie 6, a main moving magnet set 7, and guide magnet sets 8. Hereunder the switch system will be described in an embodiment of the present invention.

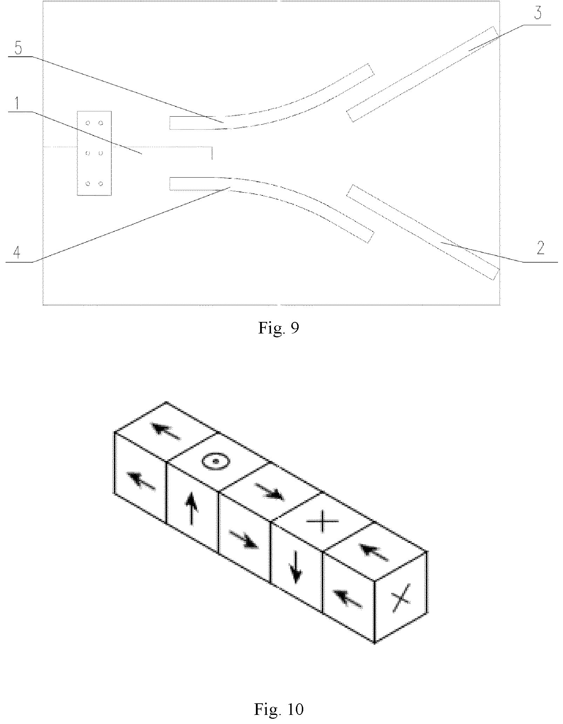

As shown in Fig. 7, the main track 1, the main track 2, the main track 3, the telescopic guide track 4 and the telescopic guide track 5 consist of a permanent magnet array respectively, the turning radius at the bifurcation is 30°, and a set of telescopic magnetic guide tracks is provided at the two sides of the bifurcation; the tracks formed by the magnets are in height of 34mm and laid in a "splay" form; the telescopic guide track is controlled by a motor to extend and retract, and the length of extension is 34mm, as shown in Fig. 9. The arrangement of the tracks and the onboard magnets is shown in Fig. 10

As shown in Fig. 8, the onboard magnet sets comprise a bogie 6, a main moving magnet set 7, and guide magnet sets 8 on the two sides. The main moving magnet set 8 is arranged at the center; the guide magnet sets 9 are arranged at the two sides of the main moving magnet set 8, at 36mm spacing from the main moving magnet set respectively. The length of extension of the magnet sets is 36mm. The magnet sets and the linear motor are installed on the bogie 6.

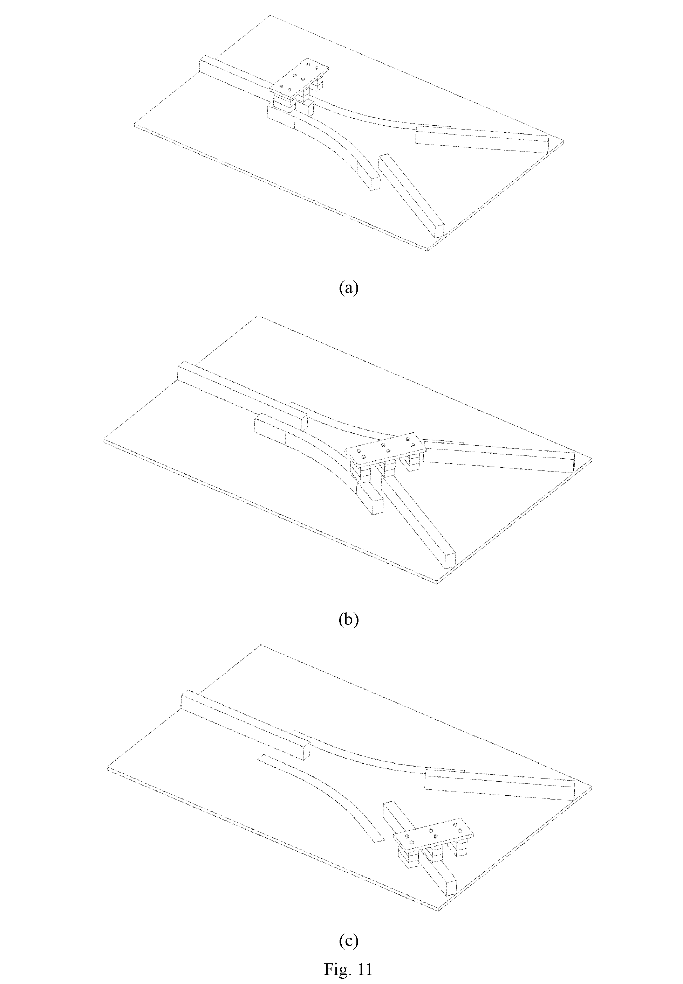

As shown in Fig. 11(a), when the train runs on the linear main track 1, the main moving magnet set 7 in the onboard magnet sets works with the main track 1 to provide levitation force, so that the train runs on the main track 1 in a levitation state under the action of the thrust force of the motor; when the train is about to turn left through the bifurcation, as shown in Fig. 11(b), the left telescopic guide track 4 on the train extends under the control of the associated motor and is subjected to the action of a turning track magnetic field formed by a guide track composed of the left telescopic guide track and the guide magnet set 8; the guide magnet set 8 slides onto the telescopic guide track 4 without contact, the main moving magnet set 7 leaves the main track 1 and doesn't provide levitation force anymore; in the entire running process of the train through the track bifurcation, the telescopic guide track 4 is maintained in an extended state. When the onboard magnet sets are about to reach the new linear main track 2, the main moving magnet set 7 in the onboard magnet sets slides into the new track under the action of the magnetic field of the linear track 2 and works with the linear track 2 to provide levitation force. After the main moving magnet set 7 enters into the linear track 2, the operation of the guide magnet set 8 on the same side in the telescopic guide track 4 ends, as shown in Fig. 11(c), the train completes the switching operation, the motor controls the telescopic guide track 4 on the same side to retract, the main moving magnet set 7 on the train is butt-jointed with the main track 2, and the train returns to the linear operation state.

The present invention discloses a switch system of permanent magnet maglev rail transit, which comprises: a track system with switch tracks arranged thereon, and onboard magnet sets running on the track system and mainly consisting of a bogie assembly.

The switch tracks comprise: a main track 11 before bifurcation, a left turning main track 12 and a right turning main track 13, and a left-side turning track 14 and a right-side turning track 15 after bifurcation; the main track 11 forms two tracks after the switch structure, i.e., a left turning main track 12 and a right turning main track 13, which serve as the main tracks of the post-switch track system respectively; the left-side turning track 14 or the right-side turning track 15 serve as tracks for guiding (hereafter simply referred to as guide tracks), and are laid on the two sides of the bifurcation of the main track and form guide tracks with the main tracks after bifurcation; the left turning main track 12 and the right turning main track 13 are main tracks formed by the main track 11 of the switch system after bifurcation, i.e., the new main tracks into which the maglev train enters after the bifurcation of the main track 11 and through which the train returns to operation on the linear track. The main tracks and the guide tracks consist of permanent magnet arrays (e.g., Halbach arrays, etc.), which are laid along the switch tracks.

The track gauge between the guide tracks is equal to the track gauge between the main tracks. For example, the guide tracks may be arranged on the left and right sides of the main tracks, the height of the tracks formed by the magnets is 22-34mm, and the track gauge is 21-210mm.

The onboard magnet sets comprise: a fixed magnet set connected to the bogie body 17, guide magnet sets, and a driving assembly. The driving assembly may be implemented by means of a linear step motor. The onboard magnet sets consist of three magnet sets installed on the bogie, wherein: the fixed magnet set is installed at the middle of the bogie and is always in an extended state to ensure stable operation of the train on the tracks; the guide magnet sets are installed on the two sides of the bogie and are in a retracted state when the system runs linearly in the main direction; the driving assembly is configured to control the guide magnet sets on the two sides to extend and retract. The fixed magnet set and the guide magnet sets are composed of permanent magnet arrays, such as Halbach arrays, etc.

In the system, the turning angle at the bifurcation of the main track is 10-45°, and a guide track is arranged on the two sides of the bifurcation respectively.

In the system, the fixed magnet set, the guide magnet sets, and the linear step motor system are arranged on the bogie body; the guide magnet sets 19 are arranged at the two sides of the fixed magnet set 18 at 10-100mm spacing from the fixed magnet set respectively. The guide magnet sets 19 are controlled by the linear step motor to extend and retract, and the length of extension is 12-120mm downward along the bottom surface of the bogie body.

When the train runs on the linear main track, the fixed magnet set 18 in the onboard magnet sets works with the main track to provide levitation force, and the train runs on the main track in a levitation state under the electromagnetic thrust force; when the train is about to reach the track bifurcation, a guide magnet set 19 on the train extends under the control of the motor and is subjected to the action of a turning track magnetic field formed by the main track and the guide track on the same side, and the guide magnet set slides into the guide track without contact; in the entire running process of the train through the track bifurcation, the fixed magnet set is maintained in the extended state; since the main track is bifurcated into two sets of magnetic tracks after the switch structure, the tracks in the two directions move away from each other continuously and the levitation force provided by the track that is not on the turning side decreases continuously in the running process of the onboard fixed magnet set 18 toward the track bifurcation of the main track; in that process, the levitation force is mainly provided by the guide magnet set 19 and the guide track on the turning side. When the fixed magnet set 18 runs to an area where it is at a great distance from the track that is not on the turning side of the main track, the onboard fixed magnet set 18 runs into the main track after bifurcation, i.e., the left turning main track 12 or the right turning main track 13; under the action of the magnetic field of the tracks, the fixed magnet set slides into the main track after bifurcation and works with the track to provide levitation force. After the fixed magnet set 18 enters into the main track after bifurcation, the operation of the guide magnet set in the guide track ends, the trains completes the switching operation, the motor controls the guide magnet set 19 on the turning side to retract, the fixed magnet set on the train is butt-jointed with the main track after bifurcation, and the train returns to the linear operation state.

The above-mentioned switch system of permanent magnet maglev rail transit not only is applicable to trains that run in a levitation state by means of the repulsion force of permanent magnets, but also is applicable to maglev rail transit that operates in a levitation state under the control of the attraction force or tangential force of permanent magnets or electromagnetic attraction force, etc.

Hereunder two more specific embodiments are provided to facilitate understanding the present invention.

### Embodiment 1:

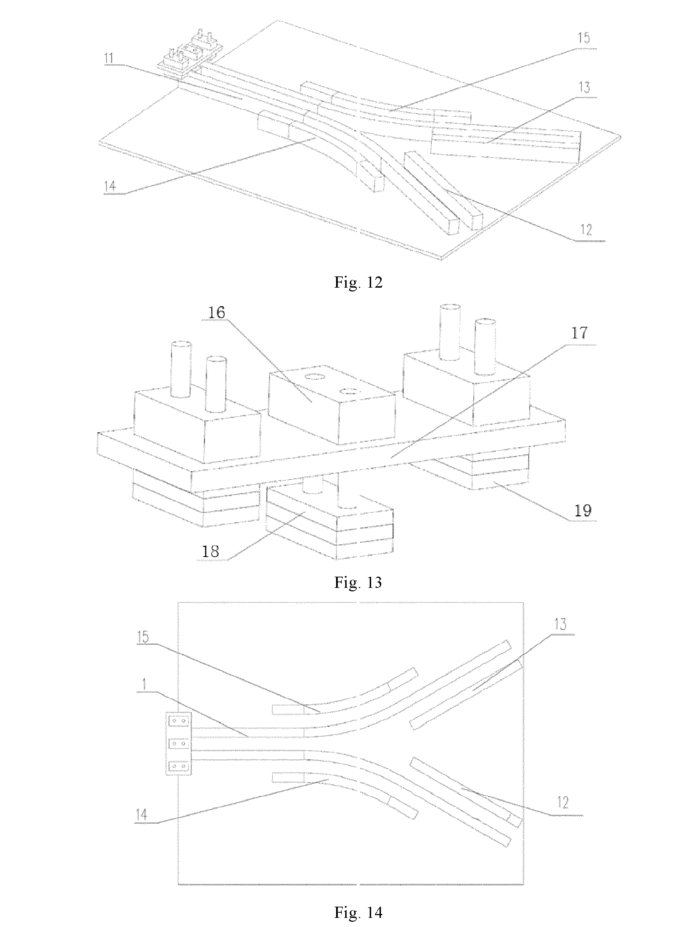

Fig. 12 is a schematic diagram of a switch system applicable to MAS-type maglev rail transit. The guide piece used in the MAS-type model may be a mechanical guide device, which is to say, side walls are arranged on the track, guide rollers are installed on the two sides of the bottom of the train, and the guide rollers roll on the side walls to ensure the balance of the train in the horizontal direction. As shown in the figure, the switch system of permanent magnet maglev rail transit comprises a main track 11, a left turning main track 12, a right turning main track 13, a left-side turning track 14, a right-side turning track 15, a linear step motor 16, a bogie body 17, a fixed magnet set 18, and guide magnet sets 19. Hereunder the present invention will be described in the specific embodiment.

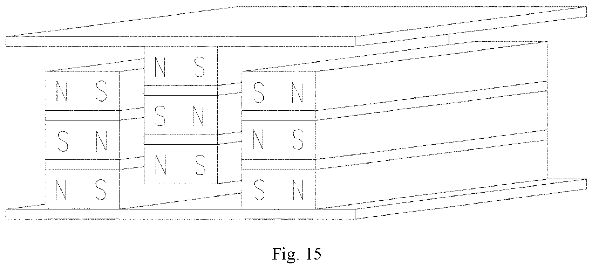

As shown in Fig. 12, the main track 11, the left turning main track 12, the right turning main track 13, and the guide track composed of the left-side turning track 14 and the right-side turning track 15 are formed by permanent magnet arrays. The turning radius at the bifurcation is 30°, and a set of guide track are arranged at the two sides of the bifurcation respectively; the height of the tracks formed by the magnets is 34mm, and the track gauge is 21mm, as shown in Fig. 14. The arrangement of the tracks and the onboard magnets is shown in Fig. 15.

As shown in Fig. 13, the onboard magnet sets consist of a linear step motor 16, a bogie body 17, a fixed magnet set 18, and guide magnet sets 19 on the two sides. The fixed magnet set 18 is arranged at the center and is maintained in an extended state; the guide magnet sets 19 are arranged at the two sides of the fixed magnet set 8 at 36mm from the fixed magnet set respectively; the linear step motor 16 controls the guide magnet sets 19 to extend and retract, and the length of extension is 12mm. The magnet sets and the linear motor are installed on the bogie body 17.

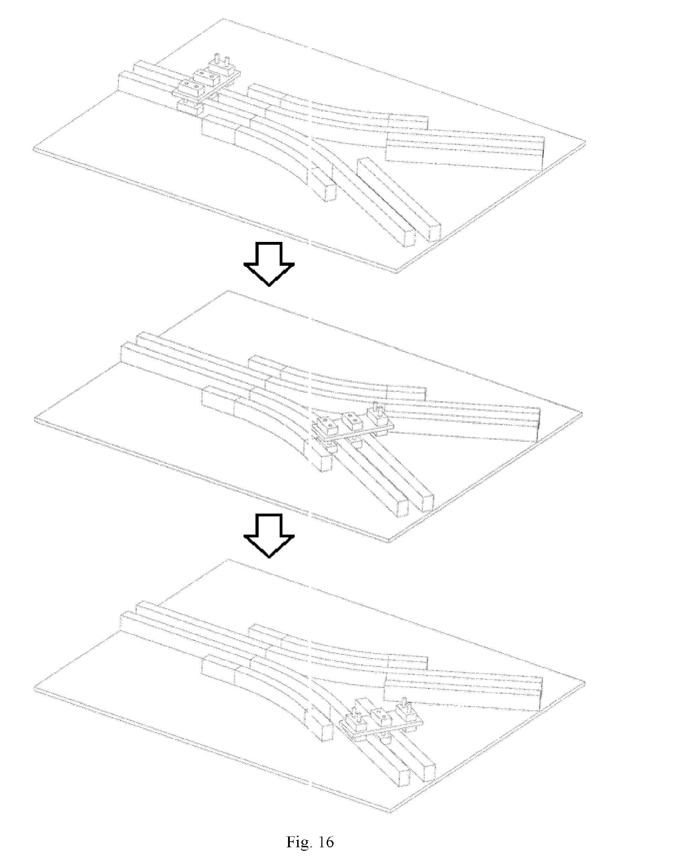

As shown in the upper part of Fig. 16, when the train runs on the linear main track 11, the fixed magnet set 18 in the onboard magnet sets works with the main track 11 to provide levitation force, and the train runs on the main track 11 in a levitation state under the thrust force of the motor; when the train is to be switched leftward, as shown in the middle part of Fig. 16, the left-side guide magnet set 19 on the train extends under the control of the motor 16 and is subjected to the action of the turning track magnetic field formed by a guide track composed of the left-side track in the main tracks 11 and the magnetic guide track on the same side, the guide magnet set 19 slides into the guide track without contact, and the fixed magnet set 3 is maintained in the extended state in the entire running process of the train through the track bifurcation. Since the main track 11 forms the left turning main track 12 and the right turning main track 13 after the bifurcation via the switch structure, the two magnetic tracks move away from each other continuously and the levitation force provided by the two magnetic tracks is decreased continuously in the moving process of the onboard fixed magnet set 18 to the track bifurcation of the main track 11, and the levitation force is mainly provided by the guide magnet set 19 and the guide tracks in that process. When the turning angle of the left-side main track exceed 30°, the distance of separation between the left-side track and the right-side track of the main track is great enough; at that point, a magnetic track is provided at 21mm track gauge at the right side of the original left turning main track 12 and forms a new left-turn guide track with the original magnetic track of the main track. When the onboard magnet sets are about to reach the new linear left turning main track 12 for linear operation, the onboard magnet sets slide into the new track under the action of the magnetic field of the left turning main track 12 and work with the linear track to provide levitation force. After the fixed magnet set 18 enters into the left turning main track 12, the operation of the guide magnet set 18 in the guide track ends, as shown in the lower part of Fig. 16, the train accomplishes the switching operation, and the linear step motor 16 controls the guide magnet set 19 on the same side to retract, the fixed magnet set 18 on the train is butt-jointed with the new main track, and the train returns to the linear operation state.

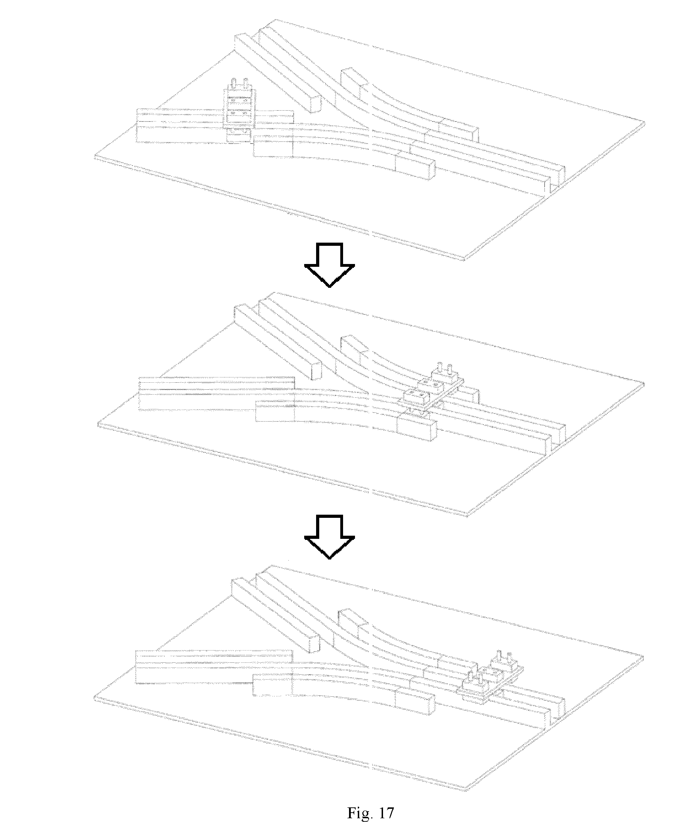

The switch system of permanent magnet maglev rail transit can realize track merging of maglev rail transit. As shown in the upper part of Fig. 17, when the train runs on the linear right turning main track 13, the fixed magnet set 4 in the onboard magnet sets works with the right turning main track 13 to provide levitation force, and the train runs on the right turning main track 13 under the thrust force of the motor. When the trains runs to the track merging area, as shown in the middle part of Fig. 17, the left-side guide magnet set 19 on the train extends under the control of the motor 16 and is subjected to the action of a turning track magnetic field formed by the left-side track of the right turning main track 13 and the magnetic guide track on the same side, the guide magnet set 19 slides into the guide track without contact, and the fixed magnet set 18 is maintained in the extended state in the entire running process of the train through the track bifurcation. Since the main track 11 forms the left turning main track 12 and the right turning main track 13 after the bifurcation via the switch structure, the onboard fixed magnet set 18 enters into the track bifurcation when it moves out of the right turning main track 13, and the levitation force is mainly provided by the guide magnet set 19 and the guide track in that process. When the turning angle of the left-side main track exceeds 30°, the onboard fixed magnet set 18 slides into the linear main track 11 without contact; at that point, under the joint action of the magnetic at the left side of the original left-side right turning main track 13 and the new linear main track 11 formed by the magnetic track of the main track at the other side, when the onboard magnet set is about to reach the new linear main track 11, the onboard fixed magnet set 18 slides into the new track under the action of the magnetic field of the linear track 1, and works with the linear track to provide levitation force. After the fixed magnet set 18 enters into the linear main track 11, the operation of the guide magnet set 19 in the guide track ends, as shown in the lower part of Fig. 17, the train accomplishes the track merging operation, and the linear step motor 16 controls the guide magnet set 19 on the same side to retract, and the fixed magnet set 18 on the train returns to the main track 11.

### Embodiment 2:

The present invention is also applicable to a switch system of Halbach array maglev rail transit.

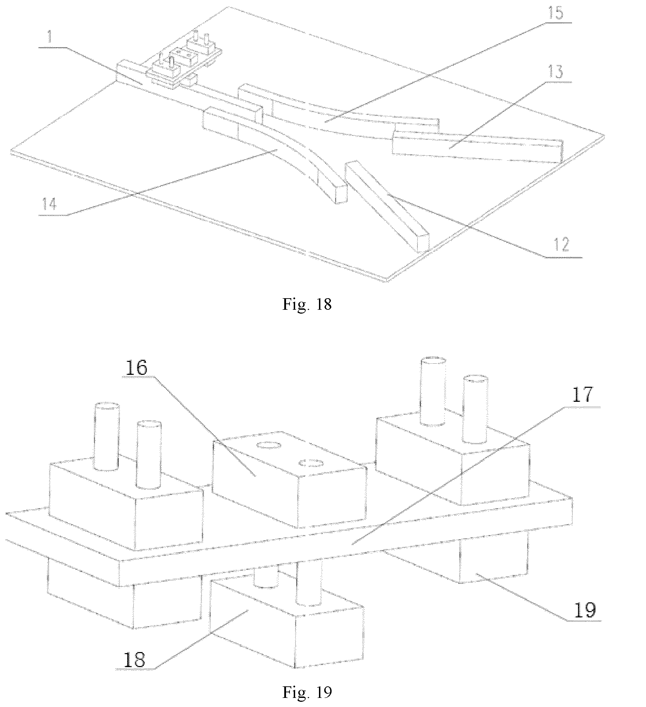

Fig. 18 is a schematic diagram of the Halbach array maglev rail transit. As shown in the figure, the switch system of permanent magnet maglev rail transit comprises a main track 11, a left turning main track 12, a right turning main track 13, a left-side turning track 14, a right-side turning track 15, a linear step motor 16, a bogie body 17, a fixed magnet set 18, and guide magnet sets 19. Hereunder the present invention will be described in the specific embodiment.

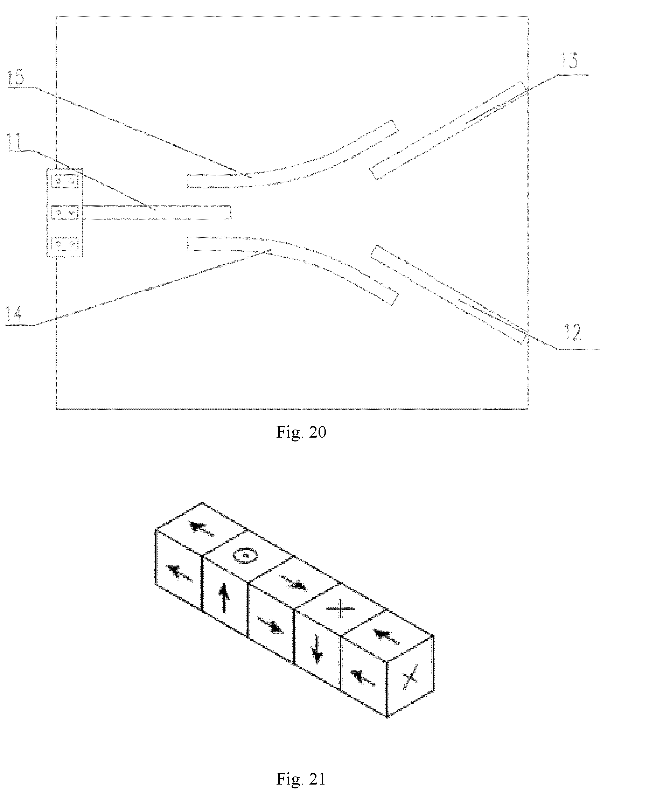

As shown in Fig. 17, the main track 11, the left turning main track 12, the right turning main track 13, the left-side turning track 14, and the right-side turning track 15 consist of a Halbach array respectively, the turning radius at the bifurcation is 30°, and a set of guide track is arranged on the two sides of the bifurcation; the height of the tracks formed by the magnets is 34mm, and the track gauge is 21mm, as shown in Fig. 20. The arrangement of the tracks and the onboard magnets is shown in Fig. 21.

As shown in Fig. 19, the onboard magnet sets consist of a linear step motor 16, a bogie body 17, a fixed magnet set 18, and guide magnet sets 19 on the two sides. The fixed magnet set 18 is arranged at the center and is maintained in an extended state; the guide magnet sets 19 are arranged at the two sides of the fixed magnet set 18 at 36mm from the fixed magnet set respectively; the linear step motor 16 controls the guide magnet sets 19 to extend and retract, and the length of extension is 12mm. The magnet sets and the linear motor are installed on the bogie body 17.

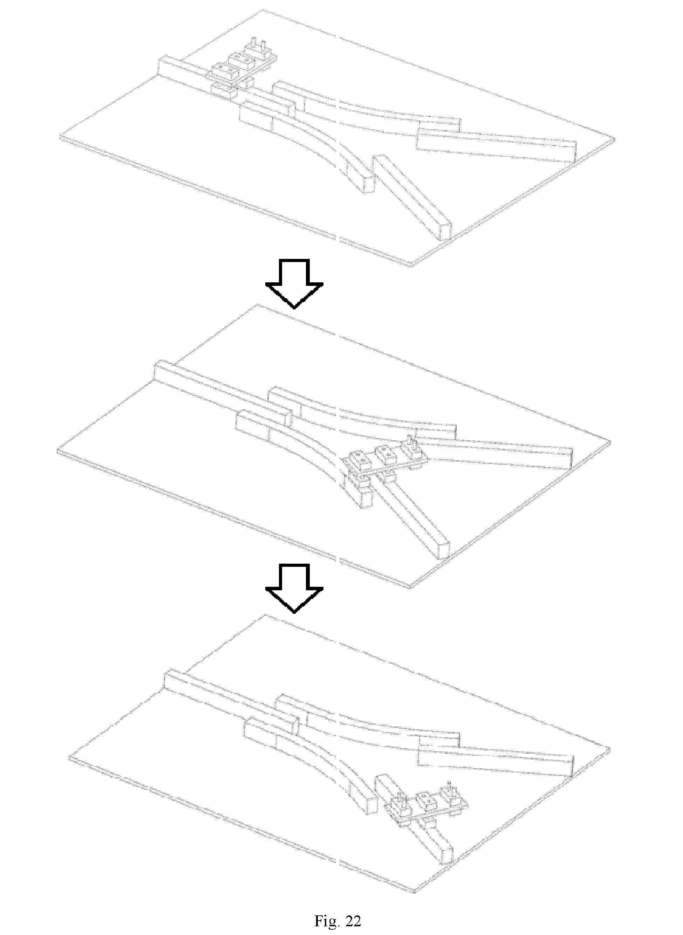

As shown in the upper part of Fig. 22, when the train runs on the linear main track 11, the fixed magnet set 18 in the onboard magnet sets works with the main track 11 to provide levitation force, and the train runs on the main track 11 in a levitation state under the thrust force of the motor; when the train is to be switched leftward, as shown in the middle part of Fig. 22, the left-side guide magnet set 19 on the train extends under the control of the motor 6 and is subjected to the action of the turning track magnetic field formed by the left-side guide magnet set, the guide magnet set 19 slides into the guide track without contact, the train runs in the direction of the left turning main track 12, and the fixed magnet set 18 is maintained in the extended state in the entire running process of the train through the track bifurcation. In the moving process of the onboard fixed magnet set 18 to the track bifurcation of the main track 11, the fixed magnet set 18 runs out of the main track 11; at that point, the main track 11 doesn't work with the fixed magnet set 18 anymore, and the levitation force is mainly provided by the guide magnet set 19 and the guide track in the direction of the left turning main track 12. When the turning angle of the left-side main track exceeds 30°, the fixed magnet set 18 is about to enter into the left turning main track 12 that is bifurcated from the original main track. When the onboard magnet sets are about to reach the new left turning main track 12 for linear operation, the onboard magnet sets slide into the new track under the action of the magnetic field of the left turning main track 12 without contact and work with the linear track to provide levitation force. After the fixed magnet set 18 enters into the left turning main track 12 and moves linearly, the operation of the guide magnet set 19 in the guide track ends, as shown in the lower part of Fig. 22, the train accomplishes the switching operation, and the linear step motor 16 controls the guide magnet set 19 on the same side to retract, the fixed magnet set 18 on the train is butt-jointed with the main track 11, and the train returns to the linear operation state.

The scope of the present invention is defined by the scope of the appended claims.

## Claims

1. A switch system of permanent magnet maglev rail transit, comprising:
a track system and a bogie assembly, wherein the track system comprises:
a main track (11), provided with a main track permanent magnet array arranged thereon in the main direction;
a left turning main track (12) arranged on the left side of the main track (11) in the main direction, at 10-45° turning angle with respect to the direction of the main track (11) before bifurcation; wherein a permanent magnet array of left turning main track is arranged on the left turning main track (12), and the magnetic field of the permanent magnet array of left turning main track extends the magnetic field of the permanent magnet array of main track but deviates to the left direction;
a right turning main track (13) arranged on the right side of the main track (11) in the main direction, at 10-45° turning angle with respect to the direction of the main track (11) before bifurcation; wherein a permanent magnet array of right turning main track is arranged on the right turning main track (13), and the magnetic field of the permanent magnet array of right turning main track extends the magnetic field of the permanent magnet array of main track but deviates to the right direction;
a left-side turning track (14), arranged at the outer side of the left turning main track (12), having an arc curved along the main track (11) to a direction parallel to the left turning main track (12); wherein a permanent magnet array of left-side turning track is arranged on the left-side turning track (14), and the magnetic field of the permanent magnet array of left-side turning track is arranged to link up the magnetic field of the permanent magnet array of left turning main track and the magnetic field of the permanent magnet array of main track;
a right-side turning track (15), arranged at the outer side of the right turning main track (13), having an arc curved along the main track (11) to a direction parallel to the right turning main track (13); wherein a permanent magnet array of right-side turning track is arranged on the right-side turning track (15), and the magnetic field of the permanent magnet array of right-side turning track is arranged to link up the magnetic field of the permanent magnet array of right turning main track and the magnetic field of the permanent magnet array of main track; **characterized in that** the bogie assembly comprises:
a bogie body (17) arranged above the track system for bearing loads to realize running or turning; wherein a fixed magnet set (18) is arranged in the middle of the lower side of the bogie body (17), at least one guide magnet set (19) is arranged on the two sides of the fixed magnet set (18) respectively, the fixed magnet set (18) is arranged opposite to the permanent magnet set for main track or the permanent magnet array of left turning main track or the permanent magnet array of right turning main track, the magnetic pole at the lower part of the fixed magnet set (18) is the same as the magnetic pole at the upper part of the permanent magnet array of main track, the permanent magnet array of left turning main track or the permanent magnet array of right turning main track, and is configured to interact with its magnetic field to provide upward thrust force to the bogie body (17), so as to maintain the bogie body (17) in a levitation state without direct contact with respect to the track system; the guide magnet set (19) is arranged opposite to the permanent magnet array of right-side turning track or the permanent magnet array of left-side turning track respectively, the magnetic pole at the lower part of the guide magnet set (19) is the same as the magnetic pole at the upper part of the permanent magnet array of right-side turning track or the permanent magnet array of left-side turning track, and is configured to participate in the interaction of the magnetic fields to provide upward thrust force to the bogie body (17), so that the bogie body (17) is maintained in a levitation state without direct contact with respect to the track system and turns along the permanent magnet array of right-side turning track or the permanent magnet array of left-side turning track; a driving assembly is arranged at the upper side of the bogie body (17) and configured to drive the guide magnet set (19) at the turning side to descend when the bogie body (17) runs above the left-side turning track (14) or the right-side turning track (15); and drive the guide magnet set (19) at the turning side to retract when the bogie body (17) runs above the left turning main track (12) or the right turning main track (13).

2. The switch system of permanent magnet maglev rail transit according to claim 1, wherein the main tracks (11) comprise two or more tracks, and the main tracks (11) are arranged in a way that they transit gradually from a parallel form in the main direction to an outward bifurcated form or close up gradually from a bifurcated form to a parallel form in the main direction; the left turning main track (12) is arranged between the bifurcations of the main tracks (11), and the left-side turning track (14) is arranged at the outer side of the main track (11) that is bifurcated leftward;
the right turning main track (13) is arranged between the bifurcations of the main tracks (11), and the right-side turning track (15) is arranged at the outer side of the main track (11) that is bifurcated rightward.

3. The switch system of permanent magnet maglev rail transit according to claim 1, wherein the main tracks (11), the left turning main track (12), and the left-side turning track (14) are arranged at least partially parallel and opposite to each other;
the main tracks (11), the right turning main track (13), and the right-side turning track (15) are arranged at least partially parallel and opposite to each other.

4. The switch system of permanent magnet maglev rail transit according to any of claims 1-3, wherein the spacing between the portions of the main tracks (11), the left turning main track (12) and the left-side turning track (14) that are parallel and opposite to each other is 21-210mm; the spacing between the portions of the main tracks (11), the right turning main track (13) and the right-side turning track (15) that are parallel and opposite to each other is 21-210mm.

5. The switch system of permanent magnet maglev rail transit according to any of claims 1-3, wherein the permanent magnet arrays are Halbach arrays.

6. The switch system of permanent magnet maglev rail transit according to any of claims 1-3, wherein the driving assembly is a linear step motor (16).

7. The switch system of permanent magnet maglev rail transit according to claim 6, wherein the linear step motor (16) drives the guide magnet set (19) at the turning side to descend or retract within a range of 12-120mm or at least half of the height of the permanent magnet arrays on the track system.

8. The switch system of permanent magnet maglev rail transit according to claim 6, wherein the spacing between the guide magnet set (19) and the fixed magnet set (18) is 10-100mm.

9. A method for controlling a switch system of maglev rail transit, applied to the switch system permanent magnet maglev rail transit according to any of claims 1-8, comprising the following steps:
when the bogie body (17) bears the loads and runs in the main direction, the magnetic field of the fixed magnet set (18) interacts with the magnetic field of the permanent magnet array of main track, to maintain the bogie body (17) in a levitation state without direct contact with respect to the main tracks (11);
**characterized in that** when the bogie body (17) bears the loads and turns to a side with respect to the main direction, the magnetic field of the fixed magnet set (18) interacts with the magnetic field of the permanent magnet array of main track, to maintain the bogie assembly in a levitation state without direct contact with respect to the track system; at the same time, the guide magnet set (19) at the turning side is driven by the driving assembly to descend to be opposite to the permanent magnet array of the turning track at the turning side, the magnetic pole at the lower part of the guide magnet set (19) participates in the interaction of the magnetic fields to provide upward thrust force to the bogie body (17), so that the bogie body (17) is maintained in a levitation state without direct contact with respect to the track system and turns along the permanent magnet array of the turning track at the turning side; the driving assembly arranged on the bogie body (17) drives the guide magnet set (19) at the turning side to retract when the bogie body (17) runs above the corresponding main track after bifurcation at the turning side;
when the bogie body (17) bears the loads and closes up to the main direction gradually from a side of the main direction, in the process that the bifurcations of the main track (11) are about to close, the fixed magnet set (18) interacts with the magnetic field of the corresponding main track in the closing-up direction first to provide upward thrust force to the bogie body (17), so that the bogie body (17) is maintained in a levitation state without direct contact with respect to the track system and gradually closes up to the main direction along the main track in the closing-up direction; when the bogie body (17) gradually closes up to be above the corresponding turning track in the closing-up direction, the driving assembly drives the guide magnet set (19) arranged at the closing-up side to descend to be opposite to the permanent magnet array of the turning track at the closing-up side, the guide magnet set (19) runs to the main direction under the guiding action of the magnetic field of the permanent magnet array of the turning track at the closing-up side, and the driving assembly drives the guide magnet set (19) at the closing-up side to retract when the guide magnet set (19) closes up to the main direction of the main track (11).

10. The method for controlling a switch system of maglev rail transit according to claim 9, applied to a maglev system that is maintained in a levitation state under the control of repulsion force of permanent magnets, attraction force of permanent magnets, tangential force of permanent magnets, or electromagnetic attraction force.

## Patentansprüche

1. Schaltersystem für die Magnetschwebebahn mit Permanentmagneten, umfassend:
ein Schienensystem und eine Drehgestellbaugruppe, wobei das Schienensystem Folgendes umfasst:
eine Hauptschiene (11), die mit einem darauf in der Hauptrichtung angeordneten permanenten magnetischen Array der Hauptschiene bereitgestellt wird;
eine linksdrehende Hauptschiene (12), die auf der linken Seite der Hauptschiene (11) in der Hauptrichtung unter einem Drehwinkel von 10-45° in Bezug auf die Richtung der Hauptschiene (11) vor der Verzweigung angeordnet ist;
wobei ein permanentes magnetisches Array der linksdrehenden Hauptschiene auf der linksdrehenden Hauptschiene (12) angeordnet ist und das magnetische Feld des permanenten magnetischen Arrays der linksdrehenden Hauptschiene das magnetische Feld des permanenten magnetischen Arrays der Hauptschiene verlängert, jedoch in die linke Richtung abweicht;
eine rechtsdrehende Hauptschiene (13), die auf der rechten Seite der Hauptschiene (11) in der Hauptrichtung unter einem Drehwinkel von 10-45° in Bezug auf die Richtung der Hauptschiene (11) vor der Verzweigung angeordnet ist; wobei ein permanentes magnetisches Array der rechtsdrehenden Hauptschiene auf der rechtsdrehenden Hauptschiene (13) angeordnet ist und das magnetische Feld des permanenten magnetischen Arrays der rechtsdrehenden Hauptschiene das magnetische Feld des permanenten magnetischen Arrays der Hauptschiene verlängert, jedoch nach rechts abweicht;
eine linksdrehende Schiene (14), die an der Außenseite der linksdrehenden Hauptschiene (12) angeordnet ist und einen Bogen aufweist, der entlang der Hauptschiene (11) in eine Richtung parallel zur linksdrehenden Hauptschiene (12) gekrümmt ist; wobei ein permanentes magnetisches Array der linksdrehenden Schiene auf der linksdrehenden Schiene (14) angeordnet ist und das magnetische Feld des permanenten magnetischen Arrays der linksdrehenden Schiene angeordnet ist, um das magnetische Feld des permanenten magnetischen Arrays der linksdrehenden Hauptschiene und das magnetische Feld des permanenten magnetischen Arrays der Hauptschiene zu verbinden;
eine rechtsdrehende Schiene (15), die an der Außenseite der rechtsdrehenden Hauptschiene (13) angeordnet ist und einen Bogen aufweist, der entlang der Hauptschiene (11) in eine Richtung parallel zu der rechtsdrehenden Hauptschiene (13) gekrümmt ist; wobei ein permanentes magnetisches Array der rechtsdrehenden Schiene auf der rechtsdrehenden Schiene (15) angeordnet ist und das magnetische Feld des permanenten magnetischen Arrays der rechtsdrehenden Schiene angeordnet ist, um das magnetische Feld des permanenten magnetischen Arrays der rechtsdrehenden Hauptschiene und das magnetische Feld des permanenten magnetischen Arrays der Hauptschiene zu verbinden;
**dadurch gekennzeichnet, dass** die Drehgestellbaugruppe Folgendes umfasst:
einen Drehgestellkörper (17), der oberhalb des Schienensystems angeordnet ist, um Lasten zu tragen, um ein Laufen oder Wenden zu realisieren; wobei ein Festmagnetsatz (18) in der Mitte der Unterseite des Drehgestellkörpers (17) angeordnet ist, mindestens ein Führungsmagnetsatz (19) jeweils auf den beiden Seiten des Festmagnetsatzes (18) angeordnet ist, der Festmagnetsatz (18) gegenüber dem Permanentmagnetsatz für die Hauptschiene oder dem permanenten magnetischen Array der linksdrehenden Hauptschiene oder dem permanenten magnetischen Array der rechtsdrehenden Hauptschiene angeordnet ist, der Magnetpol am unteren Teil des festen Magnetsatzes (18) derselbe ist wie der Magnetpol am oberen Teil des permanenten magnetischen Arrays der Hauptschiene, des permanenten magnetischen Arrays der linksdrehenden Hauptschiene oder des permanenten magnetischen Arrays der rechtsdrehenden Hauptschiene,
und konfiguriert ist, um mit seinem Magnetfeld zu interagieren, um eine nach oben gerichtete Schubkraft auf den Drehgestellkörper (17) bereitzustellen, um den Drehgestellkörper (17) in einem Schwebezustand ohne direkten Kontakt in Bezug auf das Schienensystem zu halten; der Führungsmagnetsatz (19) gegenüber dem permanenten magnetischen Array der rechtsdrehenden Schiene bzw. dem permanenten magnetischen Array der linksdrehenden Schiene angeordnet ist, der Magnetpol am unteren Teil des Führungsmagnetsatzes (19) der gleiche ist wie der Magnetpol am oberen Teil des permanenten magnetischen Arrays der rechtsdrehenden Schiene bzw. des permanenten magnetischen Arrays der linksdrehenden Schiene,
und konfiguriert ist, um an der Interaktion der Magnetfelder teilzunehmen, um eine nach oben gerichtete Schubkraft für den Drehgestellkörper (17) bereitzustellen, sodass der Drehgestellkörper (17) in einem Schwebezustand ohne direkten Kontakt in Bezug auf das Schienensystem gehalten wird und sich entlang des permanenten magnetischen Arrays der rechtsdrehenden Schiene oder des permanenten magnetischen Arrays der linksseitig drehenden Schiene dreht; eine Antriebsbaugruppe an der Oberseite des Drehgestellkörpers (17) angeordnet ist und konfiguriert ist, um den Führungsmagnetsatz (19) an der Abbiegeseite zum Absenken anzutreiben, wenn der Drehgestellkörper (17) über die linksdrehende Schiene (14) oder die rechtsdrehende Schiene (15) läuft; und den Führungsmagnetsatz (19) an der Abbiegeseite zum Einfahren anzutreiben, wenn der Drehgestellkörper (17) über die linksdrehende Hauptschiene (12) oder die rechtsdrehende Hauptschiene (13) läuft.

2. Schaltersystem für die Magnetschwebebahn mit Permanentmagneten nach Anspruch 1, wobei die Hauptschienen (11) zwei oder mehr Schienen umfassen und die Hauptschienen (11) so angeordnet sind, dass sie allmählich von einer parallelen Form in der Hauptrichtung in eine nach außen gebogene Form übergehen oder sich allmählich von einer gebogenen Form in eine parallele Form in der Hauptrichtung schließen; die linksdrehende Hauptschiene (12) zwischen den Verzweigungen der Hauptschienen (11) angeordnet ist, und die linksdrehende Schiene (14) an der Außenseite der linksdrehenden Hauptschiene (11) angeordnet ist;
die rechtsdrehende Hauptschiene (13) zwischen den Verzweigungen der Hauptschienen (11) angeordnet ist, und die rechtsdrehende Schiene (15) an der Außenseite der nach rechts verzweigten Hauptschiene (11) angeordnet ist.

3. Schaltersystem für die Magnetschwebebahn mit Permanentmagneten nach Anspruch 1, wobei die Hauptschienen (11), die linksdrehende Hauptschiene (12) und die linksdrehende Schiene (14) mindestens teilweise parallel und gegenüberliegend angeordnet sind;
die Hauptschienen (11), die rechtsdrehende Hauptschiene (13) und die rechtsdrehende Schiene (15) mindestens teilweise parallel und gegenüberliegend angeordnet sind.

4. Schaltersystem für die Magnetschwebebahn mit Permanentmagneten nach einem der Ansprüche 1 bis 3, wobei der Abstand zwischen den Abschnitten der Hauptschienen (11), der linksdrehenden Hauptschiene (12) und der linksdrehenden Schiene (14), die parallel und einander gegenüberliegend sind, 21 bis 210 mm beträgt; der Abstand zwischen den Abschnitten der Hauptschienen (11), der rechtsdrehenden Hauptschiene (13) und der rechtsdrehenden Schiene (15), die parallel und einander gegenüberliegend sind, 21 bis 210 mm beträgt.

5. Schaltersystem für die Magnetschwebebahn mit Permanentmagneten nach einem der Ansprüche 1 bis 3, wobei die permanenten magnetischen Arrays Halbach-Arrays sind.

6. Schaltersystem für die Magnetschwebebahn mit Permanentmagneten nach einem der Ansprüche 1 bis 3, wobei die Antriebsbaugruppe ein linearer Schrittmotor (16) ist.

7. Schaltersystem für die Magnetschwebebahn mit Permanentmagneten nach Anspruch 6, wobei der lineare Schrittmotor (16) den Führungsmagnetsatz (19) auf der Drehseite antreibt, um sich in einem Bereich von 12-120 mm oder mindestens der Hälfte der Höhe der permanenten magnetischen Arrays auf dem Schienensystem abzusenken oder zurückzuziehen.

8. Schaltersystem für die Magnetschwebebahn mit Permanentmagneten nach Anspruch 6, wobei der Abstand zwischen dem Führungsmagnetsatz (19) und dem Festmagnetsatz (18) 10-100 mm beträgt.

9. Verfahren zum Steuern eines Schaltersystems für die Magnetschwebebahn, angewandt auf das Schaltersystem für die Magnetschwebebahn mit Permanentmagneten nach einem der Ansprüche 1 bis 8, umfassend die folgenden Schritte:
wenn der Drehgestellkörper (17) die Lasten trägt und in der Hauptrichtung läuft, interagiert das Magnetfeld des festen Magnetsatzes (18) mit dem Magnetfeld des permanenten magnetischen Arrays der Hauptschiene, um den Drehgestellkörper (17) in einem Schwebezustand ohne direkten Kontakt zu den Hauptschienen (11) zu halten;
**dadurch gekennzeichnet, dass**, wenn der Drehgestellkörper (17) die Lasten trägt und sich zu einer Seite in Bezug auf die Hauptrichtung dreht, das Magnetfeld des festen Magnetsatzes (18) mit dem Magnetfeld des permanenten magnetischen Arrays der Hauptschiene interagiert, um die Drehgestellbaugruppe in einem Schwebezustand ohne direkten Kontakt in Bezug auf das Schienensystem zu halten; gleichzeitig wird der Führungsmagnetsatz (19) auf der Drehseite durch die Antriebsbaugruppe angetrieben,
um sich abzusenken, um gegenüber dem permanenten magnetischen Array der Drehschiene auf der Drehseite zu sein, der Magnetpol am unteren Teil des Führungsmagnetsatzes (19) nimmt an der Interaktion der Magnetfelder teil, um dem Drehgestellkörper (17) eine Schubkraft nach oben bereitzustellen, sodass der Drehgestellkörper (17) in einem Schwebezustand ohne direkten Kontakt in Bezug auf das Schienensystem gehalten wird und entlang des permanenten magnetischen Arrays der Drehschiene auf der Drehseite dreht; die am Drehgestellkörper (17) angeordnete Antriebsbaugruppe den Führungsmagnetsatz (19) an der Drehseite zum Einfahren antreibt, wenn der Drehgestellkörper (17) nach der Abzweigung an der Drehseite über die entsprechende Schiene läuft;
wenn der Drehgestellkörper (17) die Lasten trägt und sich von einer Seite der Hauptrichtung allmählich der Hauptrichtung nähert, in dem Prozess, in dem die Verzweigungen der Hauptschiene (11) dabei sind, sich zu schließen, interagiert der feste Magnetsatz (18) zunächst mit dem Magnetfeld der entsprechenden Hauptschiene in der Schließrichtung, um dem Drehgestellkörper (17) eine Schubkraft nach oben bereitzustellen, sodass der Drehgestellkörper (17) in einem Schwebezustand ohne direkten Kontakt mit dem Schienensystem gehalten wird und
sich allmählich entlang der Hauptschiene in der Schließrichtung zur Hauptrichtung schließt; wenn sich der Drehgestellkörper (17) allmählich schließt, um sich in der Schließrichtung über der entsprechenden Drehschiene zu befinden, treibt die Antriebsbaugruppe den an der Schließseite angeordneten Führungsmagnetsatz (19) an, um sich abzusenken, um sich gegenüber dem permanenten magnetischen Array der Drehschiene an der Schließseite zu befinden, der Führungsmagnetsatz (19) unter der Führungswirkung des Magnetfelds des permanenten magnetischen Arrays der Drehschiene an der Schließseite in die Hauptrichtung läuft, und die Antriebsbaugruppe den Führungsmagnetsatz (19) an der Schließseite antreibt, um sich zurückzuziehen, wenn der Führungsmagnetsatz (19) sich in die Hauptrichtung der Hauptschiene (11) schließt.

10. Verfahren zum Steuern eines Schaltersystems für die Magnetschwebebahn nach Anspruch 9, angewandt auf ein Magnetschwebesystem, das unter der Kontrolle der Abstoßungskraft von Permanentmagneten, der Anziehungskraft von Permanentmagneten, der Tangentialkraft von Permanentmagneten oder der elektromagnetischen Anziehungskraft in einem Schwebezustand gehalten wird.

## Revendications

1. Système d'aiguillage de transport ferroviaire à sustentation magnétique à aimants permanents, comprenant :
un système de voie et un ensemble de bogie, dans lequel le système de voie comprend :
une voie principale (11), munie d'un réseau d'aimants permanents de voie principale agencé sur celle-ci dans la direction principale ;
une voie principale de virage à gauche (12) agencée sur le côté gauche de la voie principale (11) dans la direction principale, à un angle de virage de 10 à 45° par rapport à la direction de la voie principale (11) avant la bifurcation ; dans lequel un réseau d'aimants permanents de voie principale de virage à gauche est agencé sur la voie principale de virage à gauche (12), et le champ magnétique du réseau d'aimants permanents de voie principale de virage à gauche étend le champ magnétique du réseau d'aimants permanents de voie principale mais dévie vers la direction gauche ;
une voie principale de virage à droite (13) agencée sur le côté droit de la voie principale (11) dans la direction principale, à un angle de virage de 10 à 45° par rapport à la direction de la voie principale (11) avant la bifurcation ; dans lequel un réseau d'aimants permanents de voie principale de virage à droite est agencé sur la voie principale de virage à droite (13), et le champ magnétique du réseau d'aimants permanents de voie principale de virage à droite étend le champ magnétique du réseau d'aimants permanents de voie principale mais dévie vers la direction droite ;
une voie de virage côté gauche (14), agencée au niveau du côté externe de la voie principale de virage à gauche (12), ayant un arc courbé le long de la voie principale (11) dans une direction parallèle à la voie principale de virage à gauche (12) ; dans lequel un réseau d'aimants permanents de voie de virage côté gauche est agencé sur la voie de virage côté gauche (14), et le champ magnétique du réseau d'aimants permanents de voie de virage côté gauche est agencé pour relier le champ magnétique du réseau d'aimants permanents de voie principale de virage à gauche et le champ magnétique du réseau d'aimants permanents de voie principale ;
une voie de virage côté droit (15), agencée au niveau du côté externe de la voie principale de virage à droite (13), ayant un arc courbé le long de la voie principale (11) dans une direction parallèle à la voie principale de virage à droite (13) ; dans lequel un réseau d'aimants permanents de voie de virage côté droit est agencé sur la voie de virage côté droit (15), et le champ magnétique du réseau d'aimants permanents de voie de virage côté droit est agencé pour relier le champ magnétique du réseau d'aimants permanents de voie principale de virage à droite et le champ magnétique du réseau d'aimants permanents de voie principale ;
**caractérisé en ce que** l'ensemble de bogie comprend :
un corps de bogie (17) agencé au-dessus du système de voie pour supporter des charges afin de réaliser le déplacement ou le virage ; dans lequel un ensemble d'aimants fixes (18) est agencé au milieu du côté inférieur du corps de bogie (17), au moins un ensemble d'aimants de guidage (19) est agencé respectivement sur les deux côtés de l'ensemble d'aimants fixes (18), l'ensemble d'aimants fixes (18) est agencé de manière opposée à l'ensemble d'aimants permanents pour la voie principale ou le réseau d'aimants permanents de voie principale de virage à gauche ou le réseau d'aimants permanents de voie principale de virage à droite, le pôle magnétique au niveau de la partie inférieure de l'ensemble d'aimants fixes (18) est identique au pôle magnétique au niveau de la partie supérieure du réseau d'aimants permanents de voie principale, du réseau d'aimants permanents de voie principale de virage à gauche ou du réseau d'aimants permanents de voie principale de virage à droite, et est configuré pour interagir avec son champ magnétique pour fournir une force de poussée vers le haut au corps de bogie (17), de manière à maintenir le corps de bogie (17) dans un état de lévitation sans contact direct par rapport au système de voie ; l'ensemble d'aimants de guidage (19) est agencé respectivement de manière opposée au réseau d'aimants permanents de voie de virage côté droit ou au réseau d'aimants permanents de voie de virage côté gauche, le pôle magnétique au niveau de la partie inférieure de l'ensemble d'aimants de guidage (19) est identique au pôle magnétique au niveau de la partie supérieure du réseau d'aimants permanents de voie de virage côté droit ou du réseau d'aimants permanents de voie de virage côté gauche,
et est configuré pour participer à l'interaction des champs magnétiques pour fournir une force de poussée vers le haut au corps de bogie (17), de sorte que le corps de bogie (17) est maintenu dans un état de lévitation sans contact direct par rapport au système de voie et tourne le long du réseau d'aimants permanents de voie de virage côté droit ou du réseau d'aimants permanents de voie de virage côté gauche ; un ensemble d'entraînement est agencé au niveau de la partie supérieure du corps de bogie (17) et configuré pour entraîner la descente de l'ensemble d'aimants de guidage (19) au niveau du côté de virage lorsque le corps de bogie (17) se déplace au-dessus de la voie de virage côté gauche (14) ou de la voie de virage côté droit (15) ; et entraîner la rétraction de l'ensemble d'aimants de guidage (19) au niveau du côté de virage lorsque le corps de bogie (17) se déplace au-dessus de la voie principale de virage à gauche (12) ou de la voie principale de virage à droite (13).

2. Système d'aiguillage de transport ferroviaire à sustentation magnétique à aimants permanents selon la revendication 1, dans lequel les voies principales (11) comprennent deux voies ou plus, et les voies principales (11) sont agencées de manière à passer progressivement d'une forme parallèle dans la direction principale à une forme bifurquée vers l'extérieur ou à se rapprocher progressivement d'une forme bifurquée à une forme parallèle dans la direction principale ; la voie principale de virage à gauche (12) est agencée entre les bifurcations des voies principales (11), et la voie de virage côté gauche (14) est agencée au niveau du côté externe de la voie principale (11) qui est bifurquée vers la gauche ;
la voie principale de virage à droite (13) est agencée entre les bifurcations des voies principales (11), et la voie de virage côté droit (15) est agencée au niveau du côté externe de la voie principale (11) qui est bifurquée vers la droite.

3. Système d'aiguillage de transport ferroviaire à sustentation magnétique à aimants permanents selon la revendication 1, dans lequel les voies principales (11), la voie principale de virage à gauche (12) et la voie de virage côté gauche (14) sont agencées au moins partiellement parallèles et opposées les unes aux autres ; les voies principales (11), la voie principale de virage à droite (13) et la voie de virage côté droit (15) sont agencées au moins partiellement parallèles et opposées les unes aux autres.

4. Système d'aiguillage de transport ferroviaire à sustentation magnétique à aimants permanents selon l'une quelconque des revendications 1 à 3, dans lequel l'espacement entre les portions des voies principales (11), de la voie principale de virage à gauche (12) et de la voie de virage côté gauche (14) qui sont parallèles et opposées les unes aux autres est de 21 à 210 mm ; l'espacement entre les portions des voies principales (11), de la voie principale de virage à droite (13) et de la voie de virage côté droit (15) qui sont parallèles et opposées les unes aux autres est de 21 à 210 mm.

5. Système d'aiguillage de transport ferroviaire à sustentation magnétique à aimants permanents selon l'une quelconque des revendications 1 à 3, dans lequel les réseaux d'aimants permanents sont des réseaux de Halbach.

6. Système d'aiguillage de transport ferroviaire à sustentation magnétique à aimants permanents selon l'une quelconque des revendications 1 à 3, dans lequel l'ensemble d'entraînement est un moteur pas à pas linéaire (16).

7. Système d'aiguillage de transport ferroviaire à sustentation magnétique à aimants permanents selon la revendication 6, dans lequel le moteur pas à pas linéaire (16) entraîne la descente ou la rétraction de l'ensemble d'aimants de guidage (19) au niveau du côté de virage dans une plage de 12 à 120 mm ou au moins la moitié de la hauteur des réseaux d'aimants permanents sur le système de voie.

8. Système d'aiguillage de transport ferroviaire à sustentation magnétique à aimants permanents selon la revendication 6, dans lequel l'espacement entre l'ensemble d'aimants de guidage (19) et l'ensemble d'aimants fixes (18) est de 10 à 100 mm.

9. Procédé de commande d'un système d'aiguillage de transport ferroviaire à sustentation magnétique, appliqué au système d'aiguillage de transport ferroviaire à sustentation magnétique à aimants permanents selon l'une quelconque des revendications 1 à 8, comprenant les étapes suivantes :
lorsque le corps de bogie (17) supporte les charges et se déplace dans la direction principale, le champ magnétique de l'ensemble d'aimants fixes (18) interagit avec le champ magnétique du réseau d'aimants permanents de voie principale, afin de maintenir le corps de bogie (17) dans un état de lévitation sans contact direct par rapport aux voies principales (11) ;
**caractérisé en ce que** lorsque le corps de bogie (17) supporte les charges et tourne vers un côté par rapport à la direction principale, le champ magnétique de l'ensemble d'aimants fixes (18) interagit avec le champ magnétique du réseau d'aimants permanents de voie principale, afin de maintenir l'ensemble de bogie dans un état de lévitation sans contact direct par rapport au système de voie ; simultanément, l'ensemble d'aimants de guidage (19) au niveau du côté de virage est entraîné par l'ensemble d'entraînement pour descendre pour se trouver à l'opposé du réseau d'aimants permanents de la voie de virage au niveau du côté de virage, le pôle magnétique de la partie inférieure de l'ensemble d'aimants de guidage (19) participe à l'interaction des champs magnétiques pour fournir une force de poussée vers le haut au corps de bogie (17), de sorte que le corps de bogie (17) est maintenu dans un état de lévitation sans contact direct par rapport au système de voie et tourne le long du réseau d'aimants permanents de la voie de virage au niveau du côté de virage ; l'ensemble d'entraînement agencé sur le corps de bogie (17) entraîne l'ensemble d'aimants de guidage (19) au niveau du côté de virage pour se rétracter lorsque le corps de bogie (17) se déplace au-dessus de la voie principale correspondante après la bifurcation au niveau du côté de virage ;
lorsque le corps de bogie (17) supporte les charges et se rapproche progressivement de la direction principale d'un côté de la direction principale, au cours du processus où les bifurcations de la voie principale (11) sont sur le point de se rapprocher, l'ensemble d'aimants fixes (18) interagit d'abord avec le champ magnétique de la voie principale correspondante dans la direction de rapprochement pour fournir une force de poussée vers le haut au corps de bogie (17), de sorte que le corps de bogie (17) est maintenu dans un état de lévitation sans contact direct par rapport au système de voie et se rapproche progressivement de la direction principale le long de la voie principale dans la direction de rapprochement ; lorsque le corps de bogie (17) se rapproche progressivement pour se trouver au-dessus de la voie de virage correspondante dans la direction de rapprochement, l'ensemble d'entraînement entraîne la descente de l'ensemble d'aimants de guidage (19) agencé au niveau du côté de rapprochement pour se trouver à l'opposé du réseau d'aimants permanents de la voie de virage au niveau du côté de rapprochement, l'ensemble d'aimants de guidage (19) se déplace vers la direction principale sous l'action de guidage du champ magnétique du réseau d'aimants permanents de la voie de virage au niveau du côté de rapprochement, et l'ensemble d'entraînement entraîne la rétraction de l'ensemble d'aimants de guidage (19) au niveau du côté de rapprochement lorsque l'ensemble d'aimants de guidage (19) se rapproche de la direction principale de la voie principale (11).

10. Procédé de commande d'un système d'aiguillage de transport ferroviaire à sustentation magnétique selon la revendication 9, appliqué à un système à sustentation magnétique qui est maintenu dans un état de lévitation sous la commande d'une force de répulsion d'aimants permanents, d'une force d'attraction d'aimants permanents, d'une force tangentielle d'aimants permanents ou d'une force d'attraction électromagnétique.
